# EUROPÄISCHE PATENTSCHRIFT

(11) **EP 2 964 478 B1**
(45) Veröffentlichungstag und Bekanntmachung des Hinweises auf die Patenterteilung: **03.05.2017**
(21) Anmeldenummer: 14708539.3
(22) Anmeldetag: 06.03.2014
(51) Int. Cl.: B60K 15/035, B60K 15/03

(54) **KRAFTSTOFFBEHÄLTER MIT PNEUMATISCH ENTLEERBAREM FLÜSSIGKEITSABSCHEIDER**
FUEL CONTAINER WITH LIQUID SEPARATOR THAT CAN BE PNEUMATICALLY EMPTIED
CONTENANT À CARBURANT POURVU D'UN SÉPARATEUR DE LIQUIDE POUVANT ÊTRE VIDÉ DE MANIÈRE PNEUMATIQUE

(30) Priorität: 08.03.2013 DE 102013203994
(43) Veröffentlichungstag der Anmeldung: 13.01.2016
(73) Patentinhaber: TI Automotive Technology Center GmbH, 76437 Rastatt (DE)
(72) Erfinder: BÖCKER, Albert J., 76275 Ettlingen (DE); DOBMAIER, Andreas W., 76137 Karlsruhe (DE); EHLER, Alex, 76437 Rastatt (DE); GMÜND, Patrick, 76149 Karlsruhe (DE); GRAUER, Peter, 76872 Steinweiler (DE); MICHAELIS, Gerrit, 76448 Durmersheim (DE); OLBRICH, Matthias B., 76437 Rastatt (DE)
(74) Vertreter: Wolf, Eckhard
(86) Internationale Anmeldenummer: PCT/EP2014/054387
(87) Internationale Veröffentlichungsnummer: WO 2014/135658

(56) Entgegenhaltungen:
- US-A1- 2004 206 398

## Beschreibung

Die Erfindung betrifft einen Kraftstoffbehälter, insbesondere für Kraftfahrzeuge, mit einer Be- und Entlüftungseinrichtung zum Ausgleich eines Gasinnendrucks beim Befüllen des Behälters mit Kraftstoff und beim Verbrauch des Kraftstoffs im Betrieb einer von dem Kraftstoff betriebenen Arbeitsmaschine, wobei die Be- und Entlüftungseinrichtung eine Abscheidevorrichtung zum Abscheiden von flüssigem Kraftstoff aus einer Be- und Entlüftungsleitung aufweist. Die Erfindung betrifft weiterhin ein Verfahren zum Entleeren einer Abscheidevorrichtung einer Be- und Entlüftungseinrichtung eines Kraftstoffbehälters.

Eine Einrichtung nach dem Oberbegriff des Anspruchs 1 ist aus der US2004/0206398 bekannt.

Beim Befüllen eines Kraftstoffbehälters mit Kraftstoff ist eine Entlüftung erforderlich, um das durch den eintretenden Kraftstoff verdrängte Gasvolumen aus dem Behälter zu leiten. Ebenso ist eine Belüftung des Behälters bei abnehmenden Kraftstoffinhalt erforderlich, um einen Unterdruck im Behälter zu vermeiden, der beispielsweise zu einer Beschädigung (Kollaps) des Behälters führen könnte. Dabei ist es erforderlich, ein Austreten von Kraftstoffdämpfen, in der Regel Kohlenwasserstoffdämpfe, in die Atmosphäre zu verhindern. Zu diesem Zweck weisen bekannte Be- und Entlüftungseinrichtungen einen Aktivkohlefilter auf, der Kohlenwasserstoffdämpfe aufnehmen kann und in gewissen Zeitabständen durch Einspeisung der aufgenommenen Dämpfe in den Einlasstrackt der Kraftmaschine regeneriert wird. Dabei ist es wichtig, ein Eintreten von flüssigem Kraftstoff in den Aktivkohlefilter zu verhindern, da dieser dadurch beschädigt würde. Im Inneren, gelegentlich auch außerhalb, des Kraftstoffbehälters ist daher in der Regel eine Abscheidevorrichtung für flüssigen Kraftstoff angeordnet, die sicherstellt, dass nur Kraftstoffdämpfe an den Aktivkohlefilter weitergeleitet werden können. Die Entleerung der Abscheidevorrichtung erfolgt im Betrieb der Kraftmaschine beispielsweise durch Zuhilfenahme der Kraftstoffpumpe. Bei Hybridfahrzeugen, die teilweise rein elektrisch betrieben werden können, läuft die Kraftstoffpumpe jedoch im elektrischen Betriebsmodus nicht. Jedoch kann durch Schwappbewegungen oder dergleichen weiterhin flüssiger Kraftstoff in die Be- und Entlüftungseinrichtung und damit in die Abscheidevorrichtung eintreten und diese fluten, wodurch die Gefahr einer Kontamination des Aktivkohlefilters mit flüssigem Kraftstoff entsteht. Da auch im elektrischen Betriebsmodus die Entlüftungsfunktion erhalten bleiben muss, ist es beispielsweise nicht zweckdienlich, die Abscheidevorrichtung dann einfach mittels eines Sperrventils von dem Aktivkohlefilter zu trennen.

Ausgehend hiervon liegt der Erfindung die Aufgabe zugrunde, einen Kraftstoffbehälter der eingangs genannten Art dahingehend zu verbessern, dass eine wirksame Entleerung der Abscheidevorrichtung unter den meisten Umständen ermöglicht wird.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von der Erkenntnis aus, dass der in dem Kraftstoffbehälter enthaltene Kraftstoff im Fahrbetrieb mehr oder minder starken Schwappbewegungen unterworfen ist. Die darin enthaltene kinetische Energie kann dazu genutzt werden, die gewünschte Entleerung der Abscheidevorrichtung zu bewerkstelligen. Dies kann direkt mechanisch umgesetzt werden, oder im Sinne von "energy harvesting" (Energierückgewinnung) durch eine oder mehrere energetische Umwandlungsstufen, beispielsweise durch einen Antrieb eines Generators, der seinerseits eine Pumpe antreibt. Aus Kosten- und Zuverlässigkeitsgründen ist eine möglichst einfache Gestaltung vorzuziehen. Gemäß der vorliegenden Erfindung wird daher vorgeschlagen, dass die Abscheidevorrichtung ein Gehäuse und einen direkt oder über eine Rohrleitung mit dem Gehäuse verbundenen Rohrstutzen aufweist, in dem durch ein- und austretenden Kraftstoff Druckschwankungen auftreten, die im Sinne einer Pumpe zum Entleeren der Abscheidevorrichtung verwendbar sind. Der Rohrstutzen wird mit einem nach unten offenen Querschnitt derart in dem Behälter angeordnet, dass er unter den Umständen, unter denen ein Eintreten von flüssigem Kraftstoff in die Abscheidevorrichtung möglich und deren Entleerung erforderlich ist, ein Gasvolumen enthält, das bei in den Rohrstutzen eintretendem Kraftstoff verdrängt wird und bei ausströmenden Kraftstoff einen Unterdruck erzeugt, der durch Sogwirkung flüssigen Kraftstoff aus der Abscheidevorrichtung entfernt. Das Eintreten und Ausströmen von flüssigem Kraftstoff in den bzw. aus dem Innenbereich des Rohrstutzens erfolgt durch die erwähnten Schwappbewegungen des Kraftstoffs im Fahrzeugbetrieb.

Zweckmäßig weist die Be- und Entlüftungseinrichtung zwei Ventile auf, von denen das erste ein Entweichen von Gasen beim Eintreten von flüssigem Kraftstoff in den Rohrstutzen aus diesem ermöglicht und ein Zurückströmen von Gasen auf dem gleichen Wege beim Ausströmen von flüssigem Kraftstoff aus dem Rohrstutzen verhindert, welches also beim Eintreten von Kraftstoff in den Rohrstutzen öffnet und beim Austreten von Kraftstoff aus dem Rohrstutzen schließt. Bevorzugt ist dieses erste Ventil als Tellerventil ausgebildet. Dieses erste Ventil ist zweckmäßig in einer Wandung des Rohrstutzens oder in einer Wandung der den Rohrstutzen mit dem Gehäuse der Abscheidevorrichtung verbindenden Rohrleitung angeordnet.

Das zweite Ventil öffnet und schließt im umgekehrten Takt zu dem ersten Ventil, das heißt, es schließt beim Eintreten von Kraftstoff in den Rohrstutzen und öffnet beim Austreten von Kraftstoff aus dem Rohrstutzen. Das zweite Ventil ist ebenfalls bevorzugt als Tellerventil ausgebildet. Das zweite Ventil ist strömungstechnisch zwischen dem Innenraum der Abscheidevorrichtung, in dem sich der zu entfernende flüssige Kraftstoff ansammelt, und dem Innenraum des Rohrstutzens angeordnet. Beispielsweise ist das zweite Ventil in einer Wandung des Gehäuses der Abscheidevorrichtung zwischen dem Innenbereich des Gehäuses und dem Rohrstutzen oder der den Rohrstutzen mit dem Gehäuse der Abscheidevorrichtung verbindenden Rohrleitung angeordnet.

Durch das Zusammenspiel der zwei Ventile und die durch Schwappbewegungen erzeugten Druckschwankungen wird eine einfache pneumatische Pumpe geschaffen, die unabhängig vom Betrieb einer (elektrischen) Kraftstoffpumpe ein Entleeren der Abscheidevorrichtung ermöglicht.

Der Rohrstutzen kann direkt an das Gehäuse der Abscheidevorrichtung anschließen, oder über eine Verbindungsleitung mit diesem verbunden sein. Im Einzelfall wird dies von der Gestaltung des Kraftstoffbehälters, dem Ort der Anordnung der Abscheidevorrichtung in dem Kraftstoffbehälter und möglichen weiteren Kriterien abhängig sein.

Das erfindungsgemäße Verfahren zum Entleeren einer in einem Kraftstoffbehälter angeordneten Abscheidevorrichtung einer Be- und Entlüftungseinrichtung ist dadurch gekennzeichnet, dass kinetische Energie in Form von Schwappbewegungen von in dem Kraftstoffbehälter befindlichen Kraftstoff zur Verrichtung mechanischer Arbeit verwendet wird, indem direkt oder indirekt auf ein Ventilsystem der Abscheidevorrichtung eingewirkt wird.

In bevorzugter Ausgestaltung der Erfindung erzeugen die Schwappbewegungen des Kraftstoffs in einem gegenüber dem Behälterinnenraum abgetrennten, eine Eintrittsöffnung für den Kraftstoff aufweisenden Volumen eine pneumatische Pumpwirkung. Alternativ können die Schwappbewegungen des Kraftstoffs beispielsweise zum Antrieb eines Generators zum Betrieb einer elektrischen Zusatzpumpe oder dergleichen genutzt werden.

Im Folgenden wird die Erfindung anhand der in der Zeichnung in schematischer Weise dargestellten Ausführungsbeispiele näher erläutert. Es zeigen
- Fig. 1a: und b eine Darstellung des der Erfindung zugrunde liegenden Prinzips; und
- Fig. 2a: und b einen Schnitt durch einen Kraftstoffbehälter im Bereich einer Abscheidevorrichtung mit einem Rohrstutzen und zwei Ventilen zum Erzeugen einer Pumpwirkung durch Kraftstoff-Schwappbewegungen.

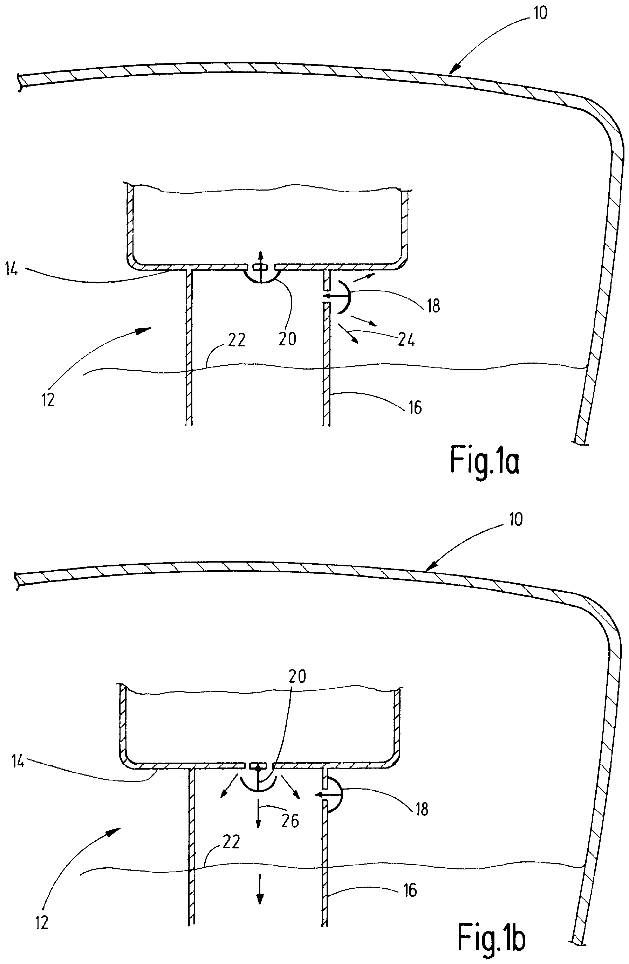

In den Skizzen der Fig. 1a und b ist das Funktionsprinzip der vorliegenden Erfindung dargestellt. Im Inneren eines Kraftstoffbehälters 10 ist als Teil einer Be- und Entlüftungseinrichtung für den Behälter eine Abscheidevorrichtung 12 für flüssigen Kraftstoff mit einem Gehäuse 14 und einem an das Gehäuse 14 anschließenden, zum Boden des Kraftstoffbehälters hin offenen Rohrstutzen 16 angeordnet. Im oberen Bereich des Rohrstutzens 16 ist in dessen Wandung ein erstes Ventil 18 angeordnet, das zum Außenbereich des Rohrstutzens 16 hin öffnet. In der unteren Wandung des Gehäuses 14, wo dieses den Rohrstutzen 16 nach oben hin begrenzt, ist ein zweites Ventil 20 angeordnet, das zum Innenraum des Rohrstutzens 16 hin öffnet.

Der Rohrstutzen 16 taucht mit seinem unteren Bereich in den flüssigen Kraftstoff ein, bzw. der flüssige Kraftstoff kann in den nach unten hin offenen Rohrstutzen bei Schwappbewegungen einströmen. Bei ansteigendem Flüssigkeitspegel 22 in dem Rohrstutzen 16 wird das in diesem vorhandene Gasvolumen komprimiert. Hierdurch wird das erste Ventil 18 in Öffnungsrichtung betätigt und das Gas kann in Richtung der Pfeile 24 entweichen. Sinkt der Flüssigkeitspegel 22 in dem Rohrstutzen 16 in der Folge wieder ab, so schließt das erste Ventil 18 gasdicht und es tritt im Innenraum des Rohrstutzens 16 ein Minderdruck, insbesondere gegenüber dem Innenraum des Gehäuses 14, auf. Durch die Druckdifferenz zwischen dem Innenraum des Gehäuses 14 und dem Innenraum des Rohrstutzens 16 wird das zweite Ventil 20 in Öffnungsrichtung betätigt, so dass im Gehäuse 14 vorhandener, flüssiger Kraftstoff durch das zweite Ventil 20 in Richtung der Pfeile 26 in den Rohrstutzen 16 strömen kann. Der vorstehend beschriebene Zyklus wiederholt sich im Rhythmus der Schwappbewegungen des flüssigen Kraftstoffs, so dass eine entsprechend getaktete Entleerung der Abscheidevorrichtung 12 erfolgt.

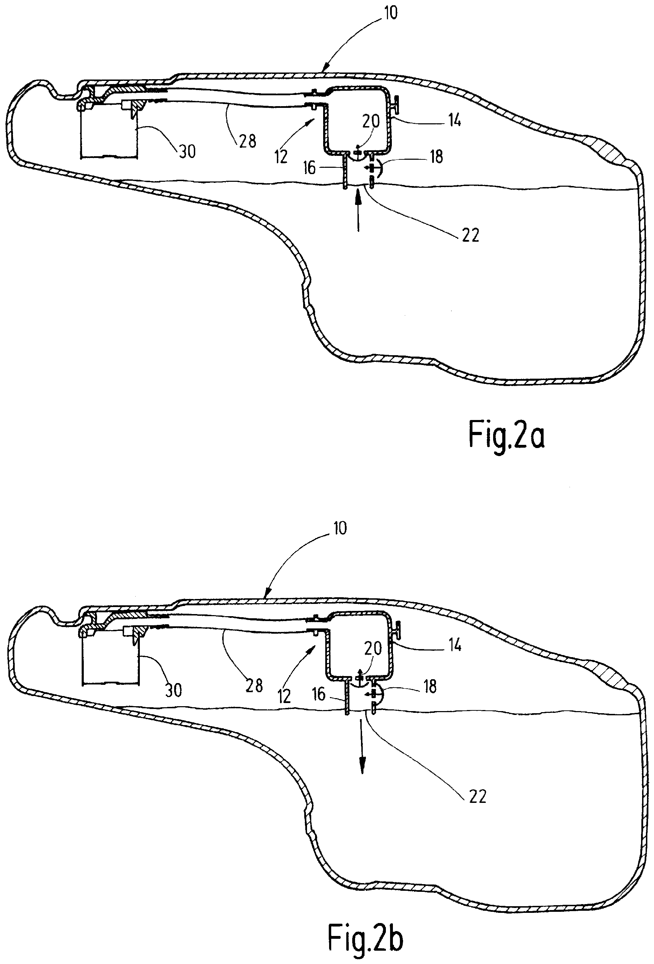

Ein Ausführungsbeispiel der Erfindung ist in Fig. 2a und b im Schnitt dargestellt. Neben einer Reihe von weiteren, nicht näher dargestellten Komponenten des Kraftstoffsystems (Kraftstoffpumpe, Filter, Komponententräger und dergleichen) ist in dem Behälter 10 eine Be- und Entlüftungseinrichtung angeordnet, die die Abscheidevorrichtung 12 mit dem Gehäuse 14 und dem Rohrstutzen 16 sowie den Ventilen 18 und 20 aufweist. Das Gehäuse 14 der Abscheidevorrichtung ist über eine Rohrleitung 28 mit einem Be- und Entlüftungsventil 30 verbunden. Von der Abscheidevorrichtung führt auf nicht näher dargestellte Weise eine weitere Rohrleitung zu einem Aktivkohlefilter, der aus dem Entlüftungsgas den schädlichen Kraftstoffanteil entfernt und weitestgehend reine Luft in die Atmosphäre entweichen lässt.

Ein unmittelbares Anschließen des Rohrstutzens 16 an das Gehäuse 14 ist nicht erforderlich. Vielmehr können das Gehäuse 14 und der Rohrstutzen 16 je nach Bedarf an unterschiedlichen Orten im Behälter 10 angeordnet und über eine Verbindungsleitung miteinander verbunden werden. Die Gestaltung des hier topfartig dargestellten Rohrstutzens 16 kann ebenfalls variiert und an die jeweiligen Bedingungen und Bedürfnisse angepasst werden, soweit die Grundfunktion der Pumpwirkung bei ein- und ausströmenden Kraftstoff in dem Umfang gewahrt bleibt, dass ein Fluten der Be- und Entlüftungseinrichtung mit flüssigem Kraftstoff verhindert wird.

## Patentansprüche

1. Kraftstoffbehälter, insbesondere für Kraftfahrzeuge, mit einer Be- und Entlüftungseinrichtung zum Ausgleich eines Gasinnendrucks beim Befüllen des Behälters (10) mit Kraftstoff und beim Verbrauch des Kraftstoffs im Betrieb einer von dem Kraftstoff betriebenen Arbeitsmaschine, wobei die Be- und Entlüftungseinrichtung eine Abscheidevorrichtung (12) zum Abscheiden von flüssigem Kraftstoff aus einer Be- und Entlüftungsleitung (28) aufweist, **dadurch gekennzeichnet, dass** die Abscheidevorrichtung (12) ein Gehäuse (14) und einen direkt oder über eine Rohrleitung mit dem Gehäuse verbundenen Rohrstutzen (16) aufweist, in dem durch ein- und austretenden Kraftstoff Druckschwankungen auftreten, die im Sinne einer Pumpe zum Entleeren der Abscheidevorrichtung (12) verwendbar sind, wobei die Abscheidevorrichtung (12) ein erstes Ventil (18) aufweist, das beim Eintreten von Kraftstoff in den Rohrstutzen (16) öffnet und beim Austreten von Kraftstoff aus dem Rohrstutzen schließt und wobei die Abscheidevorrichtung (12) ein zweites Ventil (20) aufweist, das beim Eintreten von Kraftstoff in den Rohrstutzen (16) schließt und beim Austreten von Kraftstoff aus dem Rohrstutzen öffnet.

2. Kraftstoffbehälter nach Anspruch 1, **dadurch gekennzeichnet, dass** das erste Ventil (18) als Tellerventil ausgebildet ist.

3. Kraftstoffbehälter nach Anspruch 1 oder 2, **dadurch gekennzeichnet, dass** das erste Ventil (18) in einer Wandung des Rohrstutzens (16) oder in einer Wandung der den Rohrstutzen mit dem Gehäuse (14) der Abscheidevorrichtung (12) verbindenden Rohrleitung angeordnet ist.

4. Kraftstoffbehälter nach Anspruch 1, **dadurch gekennzeichnet, dass** das zweite Ventil (20) als Tellerventil ausgebildet ist.

5. Kraftstoffbehälter nach einem der Ansprüche 1 bis 4, **dadurch gekennzeichnet, dass** das zweite Ventil (20) in einer Wandung des Gehäuses (14) der Abscheidevorrichtung (12) zwischen dem Innenbereich des Gehäuses und dem Rohrstutzen (16) oder der den Rohrstutzen mit dem Gehäuse der Abscheidevorrichtung verbindenden Rohrleitung angeordnet ist.

6. Kraftstoffbehälter nach einem der Ansprüche 1 bis 5, **dadurch gekennzeichnet, dass** die Abscheidevorrichtung (12) über eine Verbindungsleitung (28) mit einem Aktivkohlefilter verbunden ist, der den Austritt von Kraftstoffdämpfen in die Atmosphäre verhindert.

7. Verfahren zum Entleeren einer in einem Kraftstoffbehälter angeordneten Abscheidevorrichtung (12) einer Be- und Entlüftungseinrichtung, **dadurch gekennzeichnet, dass** kinetische Energie in Form von Schwappbewegungen von in dem Kraftstoffbehälter (10) befindlichen Kraftstoff zur Verrichtung mechanischer Arbeit verwendet wird, indem direkt oder indirekt auf ein Ventilsystem (18, 20) der Abscheidevorrichtung (12) eingewirkt wird, wobei die Schwappbewegungen des Kraftstoffs in einem gegenüber dem Behälterinnenraum abgetrennten, eine Eintrittsöffnung für den Kraftstoff aufweisenden Volumen eine pneumatische Pumpwirkung erzeugen.

## Claims

1. A fuel container, in particular for motor vehicles, having a venting device for equalizing an internal gas pressure during the filling of the container (10) with fuel and during the consumption of the fuel during the operation of a machine which is operated by the fuel, wherein the venting device has a separator device (12) for separating liquid fuel from a vent line (28), **characterized in that** the separator device (12) has a housing (14) and a pipe portion (16) which is connected to the housing directly or via a pipeline and in which pressure fluctuations which are used as a pump for emptying the separator device (12) occur as a result of incoming and outgoing fuel, wherein the separator device (12) has a first valve (18) which opens when fuel enters the pipe portion (16) and closes when fuel exits the pipe portion and wherein the separator device (12) has a second valve (20) which closes when fuel enters the pipe portion (16) and opens when fuel exits the pipe portion.

2. The fuel container as claimed in claim 1, **characterized in that** the first valve (18) is a disk valve.

3. The fuel container as claimed in claim 1 or 2, **characterized in that** the first valve (18) is arranged in a wall of the pipe portion (16) or in a wall of the pipeline which connects the pipe portion to the housing (14) of the separator device (12).

4. The fuel container as claimed in claim 1, **characterized in that** the second valve (20) is a disk valve.

5. The fuel container as claimed in one of claims 1 to 4, **characterized in that** the second valve (20) is arranged in a wall of the housing (14) of the separator device (12) between the inner region of the housing and the pipe portion (16) or the pipeline which connects the pipe portion to the housing of the separator device.

6. The fuel container as claimed in one of claims 1 to 5, **characterized in that** the separator device (12) is connected via a connecting line (28) to an activated carbon filter which prevents fuel vapors from escaping into the atmosphere.

7. A method for emptying a separator device (12), arranged in a fuel container, of a venting device, **characterized in that** kinetic energy in the form of sloshing movements of fuel which is contained in the fuel container (10) is used to carry out mechanical work by acting directly or indirectly on a valve system (18, 20) of the separator device (12), wherein the sloshing movements of the fuel in a volume, which is separated off from the container interior and has an inlet opening for the fuel, generate a pneumatic pumping effect.

## Revendications

1. Réservoir à carburant, en particulier pour véhicules automobiles, comprenant un dispositif de ventilation et de purge d'air pour compenser une pression interne de gaz lors du remplissage du réservoir (10) avec du carburant et lors de la consommation du carburant pendant le fonctionnement d'une machine de travail fonctionnant avec le carburant, le dispositif de ventilation et de purge d'air comportant un dispositif séparateur (12) pour séparer le carburant liquide d'une conduite de ventilation et de purge d'air (28), **caractérisé en ce que** le dispositif séparateur (12) présente un boîtier (14) et une tubulure (16) raccordée directement ou par l'intermédiaire d'une canalisation au boîtier (14), dans laquelle apparaissent, du fait de l'entrée et de la sortie de carburant, des fluctuations de pression qui peuvent être utilisées à la manière d'une pompe pour vider le dispositif séparateur (12), le dispositif séparateur (12) présentant une première soupape (18) qui s'ouvre lors de l'entrée de carburant de carburant dans la tubulure (16) et se ferme lors de la sortie de carburant de la tubulure et le dispositif séparateur (12) présentant une deuxième soupape (18) qui se ferme lors de l'entrée de carburant de carburant dans la tubulure (16) et s'ouvre lors de la sortie de carburant de la tubulure.

2. Réservoir à carburant selon la revendication 1, **caractérisé en ce que** la première soupape (18) est réalisée sous la forme d'une soupape à disque.

3. Réservoir à carburant selon la revendication 1 ou 2, **caractérisé en ce que** la première soupape (18) est disposée dans une paroi de la tubulure (16) ou dans une paroi de la canalisation reliant la tubulure au boîtier (14) du dispositif séparateur (12).

4. Réservoir à carburant selon la revendication 1, **caractérisé en ce que** la deuxième soupape (20) est réalisée sous la forme d'une soupape à disque.

5. Réservoir à carburant selon l'une des revendications 1 à 4, **caractérisé en ce que** la deuxième soupape (20) est disposée dans une paroi du boîtier (14) du dispositif séparateur (12) entre la zone intérieure du boîtier et la tubulure (16) ou la canalisation reliant la tubulure au boîtier du dispositif séparateur.

6. Réservoir à carburant selon l'une des revendications 1 à 5, **caractérisé en ce que** le dispositif séparateur (12) est reliée par une conduite de raccordement (28) à un filtre à charbon actif qui empêche la sortie de vapeurs de carburant dans l'atmosphère.

7. Procédé de vidange d'un dispositif séparateur (12) d'un dispositif de ventilation et de purge d'air disposé dans un réservoir à carburant, **caractérisé en ce que** de l'énergie cinétique sous la forme de mouvements de clapotis du carburant se trouvant dans le réservoir à carburant (10) est utilisée pour accomplir un travail mécanique en agissant directement ou indirectement sur un système de soupapes (18, 20) du dispositif séparateur (12), les mouvements de clapotis du carburant produisant un effet de pompe pneumatique dans un volume séparé de l'espace intérieur du réservoir, présentant une ouverture d'entrée pour le carburant.
